(19) **Europäisches Patentamt**

**European Patent Office**

**Office européen des brevets**

(11) Veröffentlichungsnummer: **0 234 188**
**B1**

(12) # EUROPÄISCHE PATENTSCHRIFT

(45) Veröffentlichungstag der Patentschrift:
14.03.90

(51) Int. Cl.⁴: **B01D 53/36**

(21) Anmeldenummer: 87100084.0

(22) Anmeldetag: 07.01.87

(54) **Verfahren zur Reinigung von Oxide des Stickstoffs und Schwefels enthaltenden Abgasen aus Verbrennungsanlagen.**

(30) Priorität: 18.01.86 DE 3601378

(43) Veröffentlichungstag der Anmeldung:
02.09.87 Patentblatt 87/36

(45) Bekanntmachung des Hinweises auf die Patenterteilung:
14.03.90 Patentblatt 90/11

(84) Benannte Vertragsstaaten:
AT BE CH DE ES FR GB GR IT LI LU NL SE

(56) Entgegenhaltungen:
EP-A- 0 132 584
DE-A- 2 919 812
US-A- 4 164 546

Kirk-Othmer "Encyclopedia of Chemical Technology", 3. Aufl., Band 22, 1983, Seiten 199-203

Die Akte enthält technische Angaben, die nach dem Eingang der Anmeldung eingereicht wurden und die nicht in dieser Patentschrift enthalten sind.

(73) Patentinhaber: Degussa Aktiengesellschaft,
Weissfrauenstrasse 9, D-6000 Frankfurt am Main 1(DE)

(72) Erfinder: Brand, Reinhold, Dr., Hanfwiesenstrasse 11 a,
D-8752 Mömbris(DE)
Erfinder: Engler, Bernd, Dr., Treuener Strasse 2,
D-6450 Hanau 9(DE)
Erfinder: Kleine-Möllhoff, Peter, Freigerichter
Strasse 82 a, D-8755 Alzenau(DE)
Erfinder: Koberstein, Edgar, Dr., Wolfskernstrasse 8,
D-8755 Alzenau(DE)
Erfinder: Voelker, Herbert, Bogenstrasse 43,
D-6450 Hanau 11(DE)

**Beschreibung**

Die Erfindung betrifft ein hinsichtlich der Verfahrensführung und damit des Apparaturaufwands vereinfachtes Verfahren zur Reinigung von Oxide des Stickstoffs und Schwefels enthaltenden Abgasen aus Verbrennungsanlagen.

Sowohl Stickoxide als auch Schwefeloxide, die bei Verbrennungsprozessen entstehen, zählen zu den Hauptverursachern des sauren Regens bzw. des Fotosmogs und der damit verbundenen Umweltschädigungen. Sie sollten daher durch Entfernung aus den Feuerungsabgasen vor deren Abgabe an die Umgebung weitgehend beseitigt werden.

Quellen der Stickoxid- und Schwefeloxidemissionen sind der Kraftfahrzeugverkehr, stationäre Verbrennungsmotoren, Kraftwerke, Heizkraftwerke, Dampferzeuger für industrielle Zwecke und industrielle Produktionsanlagen. Auch Kohlenmonoxid und Kohlenwasserstoffe werden zum Teil von diesen Schadstoffquellen emittiert.

Durch Verwendung stickstoff- und schwefelarmer Brennstoffe sowie durch geeignete Zusätze zum Brennstoff oder durch Modifikation der Verbrennungssysteme kann zwar eine Absenkung der Schadstoffkonzentrationen im Abgas erzielt werden, jedoch sind diesen primärseitigen Verfahren sowohl technische als auch ökonomische Grenzen gesetzt, so daß es bislang nicht möglich ist, genügend stickoxid- und/oder schwefeloxidfreies Abgas zu erreichen.

Abgase aus z.B. mit fossilen Brennstoffen betriebenen Feuerungen oder aus überstöchiometrisch betriebenen, d.h. mager eingestellten Verbrennungskraftmaschinen, enthalten neben Oxiden des Stickstoffs und Schwefels überschüssigen Sauerstoff.

Die Entstickung und Entschwefelung dieser Abgase erfolgt bislang in der Regel in getrennten Verfahrensstufen, die an verschiedenen Stellen im Rauchgasweg installiert werden. Bekannte Verfahren zur kombinierten Entstickung und Entschwefelung sind bislang noch sehr aufwendig und mit vielen Nachteilen behaftet. Bei der großtechnischen Realisierung werden daher derzeit noch Konzepte mit getrennter Entstickung und Entschwefelung bevorzugt.

Die Stickoxidminderung bei Feuerungen erfolgt in der Regel durch katalytische Reduktion. Um eine optimale Ausnutzung des benötigten Reduktionsmittels zu gewährleisten, kommen wegen des Sauerstoffanteils im Abgas hauptsächlich selektive katalytische Reduktionsverfahren für die Entfernung von Stickoxiden in Frage. Als Reduktionsmittel hat sich Ammoniakgas bewährt, das an einem geeigneten Katalysator leicht mit den Oxiden des Stickstoffs aber nur in geringem Umfang mit dem Sauerstoff reagiert.

Im Gegensatz zur Entstickung haben sich zur Entschwefelung von Abgasen nichtkatalytische nasse Verfahren weitestgehend durchgesetzt. Bei dem am häufigsten angewandten Prozeß wird der Schwefel in Form von Gips abgeschieden. Zunächst wird das im Abgas vorhandene Schwefeldioxid gegebenenfalls nach vorheriger Naßabsorption, mit Luftsauerstoff zu Schwefeltrioxid oxidiert. Gleichzeitig oder anschließend wird mit einer Calziumhydroxid-, Calziumcarbonat- oder Calziumoxid-Suspension behandelt. Der anfallende Gips muß entweder auf einer Deponie abgelagert werden oder kann nach vorheriger Aufarbeitung bei der Baustoffindustrie Verwendung finden.

Bei Kraftwerken mit Feuerungen finden derzeit folgende Rauchgasreinigungskonzepte Anwendung:

1. Katalytische Entstickung im «heißen» Rauchgasteil im Hochstaubbereich und Entschwefelung nach der Rauchgasentstaubung durch Überführung des Schwefeldioxids in Gips.

Hierzu wird unmittelbar nach dem Kessel ein Ammoniak/Luft-Gemisch homogen im Rauchgasstrom verteilt. Das Reaktionsgemisch passiert hierauf einen Entstickungskatalysator, der auf ca. 370–400°C gehalten wird. In einem nachfolgenden Wärmeaustauscher wird dem Rauchgas Wärme entzogen, die z.B. zur Vorwärmung der Verbrennungsluft für den Kessel dient. Das Rauchgas wird sodann entstaubt. Das weitgehend staubfreie, aber noch Schwefeldioxid enthaltende Rauchgas wird in der Rauchgasentschwefelungsanlage mit Luftsauerstoff und einer geeigneten Calziumverbindung zu Gips umgesetzt. Das so gereinigte Abgas wird über einen Kamin in die Umwelt abgeführt.

2. Entschwefelung wie bei Konzept 1. und katalytische Entstickung im «kalten» Rauchgasteil im Niedrigstaubbereich.

Hierzu wird dem Rauchgas nach dem Verlassen des Kessels in einem Wärmeaustauscher Wärme entzogen und dann der Flugstaub abgeschieden. Es schließt sich die Rauchgasentschwefelung an. Sie erfolgt nach demselben Verfahrensprinzip wie bei Konzept 1. Mittels eines weiteren Wärmeaustauschers wird das Rauchgas mit dem den Entstickungsprozess verlassenden Rauchgas vorgeheizt und dann in einer nachgeschalteten Heizvorrichtung, welche z.B. Erdgas im Rauchgasstrom verbrennt (Stützfeuerung), auf die für die Entstickung notwendige Reaktionstemperatur gebracht. Das so aufgeheizte Rauchgas wird nun mit dem Reduktionsmittel Ammoniak versetzt und passiert dann den Entstickungskatalysator. Die Stickoxide werden an diesem selektiv zu Stickstoff und Wasserdampf reduziert. Das entstickte Rauchgas wird dann zu dem Wärmeaustauscher zurückgeleitet, in welchem die aus der Entschwefelungsanlage kommenden Rauchgase vorgewärmt werden; sie passieren diesen Wärmeaustauscher und gehen dann in den Kamin.

Beide besprochenen bekannten Rauchgasreinigungskonzepte besitzen jedoch eine Reihe von Nachteilen, die sich auf den Betrieb der Feuerungsanlagen störend auswirken.

Die katalytische Entstickung gemäß Konzept 1. hat zwar den Vorteil, daß bei Vollastbetrieb eine Rauchgastemperatur von 350–400°C erreicht werden kann. Dies sind Temperaturen, in dem bekannte Entstickungskatalysatoren betrieben werden können. Bei Lastwechselbetrieb, der bei deutschen Kraftwerken sehr häufig die Regel ist, sinkt jedoch im Teillastbereich die Rauchgastemperatur in der Regel unter das für den Betrieb des Katalysators erforderliche Minimum ab, so daß eine aufwendige Bypass-Schaltung zur Abzweigung von Rauchgas vor der letzten Wärmeentzugstufe im Kessel zur Aufrechterhaltung der Reaktionstemperatur notwendig wird.

Die Betriebsweise im Hochstaubbereich führt darüber hinaus zu Katalysatorabrasionen durch den Flugstaub und kann Ablagerungen und damit Verstopfung der Katalysatorkanäle bzw. -poren hervorrufen. Das hat zur Folge, daß zur Vorbeugung in relativ kurzen Zeitabständen eine Abreinigung durch Abblasen z.B. mit Heißdampf erfolgen muß.

Bei jeder mit Ammoniak betriebenen Entstickungsanlage tritt zudem das Problem auf, daß dieses Reduktionsmittel nicht vollständig umgesetzt wird und eine kleine Menge davon, die als Ammoniakschlupf bezeichnet wird, nach der Entstickungsanlage im Rauchgas vorliegt. Dies führt infolge von Umsetzungen zwischen Ammoniak und den im Rauchgas vorhandenen Schwefeloxiden zu korrosiven und klebrigen Ablagerungen aus Ammoniumhydrogensulfat und/oder Ammoniumsulfat, z.B. auf den Wärmeaustauschflächen des Luftvorwärmers. Das damit periodisch notwendig werdende Waschen des Luftvorwärmers erzeugt ein Abwasserproblem. Weiterhin wird sowohl der Staub aus der Entstaubungsanlage als auch der Gips aus der Rauchgasentschwefelungsanlage mit Ammoniak kontaminiert und erschwert eine Weiterverwertung bzw. Entsorgung. Aus dem Kamin entweichendes Ammoniak führt zu weiteren Umweltbelastungen.

Nach dem Konzept 2. enthält das über den Entstickungskatalysator geleitete Rauchgas zwar nur geringe Mengen Staub und Schwefeldioxid, was für die Funktion des Entstickungskatalysators an sich günstig ist. Dieser Vorteil muß jedoch durch eine Reihe von Nachteilen erkauft werden: So müssen z.B. nach der Entschwefelungsanlage ein Gasvorwärmer und eine Stützfeuerung, die in der Regel mit Edelbrennstoff, z.B. Erdgas, also wertvoller Primärenergie befeuert wird, installiert werden. Daraus erwachsen zusätzliche Investitions- und Betriebskosten. Das Problem der korrosiven Ammoniumsalzablagerungen und der Waschabwässer bleibt auch bei diesem Konzept erhalten. Allerdings wird der Gips nicht mehr mit Ammoniak belastet.

Beiden bekannten Verfahrenskonzepten ist gemeinsam, daß die Rauchgasentschwefelung auf nassem Wege durchgeführt wird, wobei Gips produziert wird. Als Betriebsstoff wird hierfür in den meisten Fällen Kalkstein verwendet, der zusätzlich Kosten verursacht. Der angefallene Gips kann mangels Bedarf, aus Kostengründen oder wegen ungenügender Reinheit nur teilweise in der Bauindustrie abgesetzt werden.

Aus der US-A 4 164 546 ist schon ein Verfahren zur selektiven Reduktion von in Abgasen enthaltenen Stickoxiden mit Ammoniak in Gegenwart von $SO_2$ und Sauerstoff beschrieben, wobei die dazu verwendeten Kupferoxid- oder Vanadiumoxid-Katalysatoren zwar die Stickoxidreduktion fördern, sich aber im Betrieb in Sulfate umwandeln, die in einem gesonderten Schritt immer wieder reduziert werden müssen. Es wird zwar auch ein zweistufiges Verfahren erwähnt, welches in erster Stufe eine Entstickung mit Ammoniak und in zweiter Stufe eine Überführung von $SO_x$ in $SO_3$ an einem $K_2O$–$V_2O_5$-Katalysator mit Beseitigung des $SO_3$ auf an sich bekannte Weise, anspricht. Wie die $SO_3$-Beseitigung im einzelnen vonstatten gehen soll, ist aber nicht angegeben.

Aus der EP-A 0 132 584 ist ferner ein Verfahren zur Entfernung von Stickoxiden und Schwefeloxiden aus Abgasen von Verbrennungsanlagen bekannt, in dem die Stickoxide bei etwa 650–700°C an einem multifunktionellen Katalysator mit Kohlenwasserstoffen und Kohlenmonoxid reduziert und die Schwefeloxide anschließend katalytisch bei 400–500°C zu Schwefeltrioxid oxidiert werden. Die durch Vermischen mit dem in den Abgasen enthaltenen Wasserdampf entstehende Schwefelsäure wird auskondensiert. Um die katalytische Entstickung vornehmen zu können, muß der im Abgasstrom der Verbrennungsanlage enthaltene Sauerstoff vorher mit Hilfe eines Zusatzbrennstoffs, wie Erdgas oder Heizöl, an einem Oxidationskatalysator beseitigt werden. Damit die in dem stickoxidfreien Abgasstrom enthaltenen Schwefeloxide oxidiert werden können, muß dem Abgasstrom vorher wieder Sauerstoff zugefügt werden. Aufgrund des benötigten Temperaturgefälles zwischen Reduktions- und Oxidationsstufe kann es erforderlich werden, einen Wärmeaustauscher einzuschalten.

Gegenstand der Erfindung ist ein Verfahren zur Reinigung von Oxide des Stickstoffs und Schwefels enthaltenden Abgasen aus Verbrennungsanlagen und industriellen Produktionsprozessen durch katalytische Reduktion der Stickoxide, nachfolgende katalytische Oxidation von Schwefeldioxid mit Sauerstoff und Überführung des erhaltenen Schwefeltrioxids in Schwefelsäure.

Das Verfahren ist dadurch gekennzeichnet, daß man die Abgase mit der zu einer selektiven Reduktion der Stickoxide erforderlichen Menge Ammoniak versetzt, das Gemisch einem einzigen Reaktor, der unmittelbar hintereinander einen mit dem Katalysator für die Stickoxidreduktion ausgerüsteten ersten Abschnitt und einen mit dem Oxidationskatalysator ausgerüsteten zweiten Abschnitt aufweist, mit einer Temperatur von 250–550°C zuführt, das von den Stickoxiden sowie gegebenenfalls von Kohlenmonoxid und/oder Kohlenwasserstoffen befreite, Schwefeltrioxid enthaltende Abgas auf eine Temperatur von 70–150°C abkühlt und dann die Hydratisierung des Schwefeltrioxids in einem ein- oder mehrstufigen Wäscher mit 70–85 gew.-%iger Schwefelsäure bei Temperaturen von 40–130°C vornimmt.

Ein solches Filter erfordert zwar geringfügig höhere Investitionen im Vergleich zu einem kaltgehenden Elektrofilter, dafür entfallen aber Wiederaufheizungsmaßnahmen und Probleme, die mit der Katalysatorabrasion zusammenhängen. Beide Varianten besitzen zudem den Vorteil, daß der ausgeschleuste Staub nicht mit Ammoniak kontaminiert ist. Da die Entschwefelung nach dem erfindungsgemäßen Verfahren keinen Gips produziert, entstehen keine neuen Deponie- oder Absatzprobleme, die infolge der Verunreinigung des Gipses oder eines Gipsüberangebots auf dem Markt auftreten können.

In dem erfindungsgemäßen Verfahren lassen sich grundsätzlich alle für die selektive Stickoxidreduktion geeigneten Katalysatoren einsetzen. Beispiele hierfür sind Katalysatoren auf der Basis von Mischungen von Oxiden des Titans, Wolframs, Vanadins und Molybdäns (DE-PS 2 458 888) oder Katalysatoren, bestehend aus natürlichen oder synthetischen Aluminiumsilikaten, z.B. Zeolithe oder Katalysatoren, die Edelmetalle der Platingruppe enthalten.

Auch für die Oxidation des Schwefeldioxids lassen sich alle hierfür gebräuchlichen Katalysatorsysteme verwenden. Beispiele hierfür sind die in Gmelin, Handbuch der Anorg. Chemie, Band 9, Teil A, Seite 320ff. (1975) aufgeführten Systeme, z.B. Platin oder Vanadinpentoxid oder Eisenoxid enthaltende Katalysatoren.

Der Katalysator für die Stickoxidreduktion und der Katalysator für die Schwefeldioxidoxidation kann Waben- oder auch Schüttgutform aufweisen. Erstgenannte Variante wird wegen des geringeren Staudrucks und der einfacheren Möglichkeit zur Abreinigung von Staub bevorzugt.

Im Rahmen der Erfindung kann einer oder beide Katalysatoren durch und durch aus katalytisch aktiver Masse bestehen (Vollkatalysator) oder bei einer oder beiden Katalysatoren die katalytisch aktive Substanz auf einem inerten keramischen oder metallischen Körper, der gegebenenfalls noch mit einer oberflächenvergrößernden Oxidschicht überzogen ist, vorliegen (Trägerkatalysator).

Die in einem einzigen Reaktor durchgeführten beiden katalytischen Reaktionen können mit Vorteil im Temperaturbereich von 350–450, vorzugsweise 380–420°C betrieben werden.

Das von den Stickoxiden befreite und die Schwefeldioxidoxidationsstufe verlassende Abgas muß erfindungsgemäß auf 70–150°C abgekühlt werden, ehe man das gebildete Schwefeltrioxid mit Wasser zu Schwefelsäure umsetzen kann. Es hat sich als besonders günstig erwiesen, dieses Abgas vor der Hydratisierung des Schwefeltrioxids auf eine Temperatur von 110–140°C abzukühlen.

Die Hydratisierung des Schwefeltrioxids in einem ein- oder mehrstufigen Wäscher kann vorteilhaft mit 75–80 gew.-%iger Schwefelsäure durchgeführt werden. Solche Anlagen sind aus der Technologie der Schwefelsäuregewinnung bekannt.

Die Hydratation des Schwefeltrioxids verläuft besonders gut bei Temperaturen von 95–125, vorzugsweise 100–115°C.

Ein Vorteil des erfindungsgemäßen Verfahrens beruht in der kompakten Bauweise der Abgasreinigungsanlage, die durch die gemeinsame Anordnung der Entstickungs- und Entschwefelungskatalysatoren in dem gemeinsamen Reaktor zustande kommt.

Ein weiterer Vorteil besteht darin, daß durch die Nachschaltung des Oxidationskatalysators ein Ammoniakschlupf durch die Gesamtanlage vollständig vermieden werden kann, da die geringe Menge unverbrauchten Ammoniaks aus der Entstickungsstufe am Oxidationskatalysator vollständig oxidiert wird. Der Stickoxidgehalt im gereinigten Rauchgas wird dadurch nur geringfügig wieder angehoben. Dadurch entfallen alle mit dem Ammoniakschlupf herkömmlicher Rauchgasreinigungsanlagen verbundenen technischen Probleme, wie z.B. die Korrosion durch Ammoniumsalzablagerungen und Umweltbelastungen durch Waschwässer oder Ammoniakabgabe an die Umwelt.

In der Entschwefelung wird $H_2SO_4$ in Konzentrationen von 75–80 Gew.-% fortlaufend erzeugt und ausgeschleust. Die aus Schwefeloxiden gewonnene Schwefelsäure verursacht praktisch keine Rohmaterialkosten und kann wegen ihrer großen Anwendungsbreite in der chemischen Industrie leicht abgesetzt werden.

Die Erfindung wird nachfolgend anhand der Verfahrensschemata der beiden Zeichnungsfiguren mit Funktionsbeschreibung und einem Ausführungsbeispiel weiter erläutert.

Funktionsbeschreibung

Variante 1: Entstaubung vor den Katalysatoren

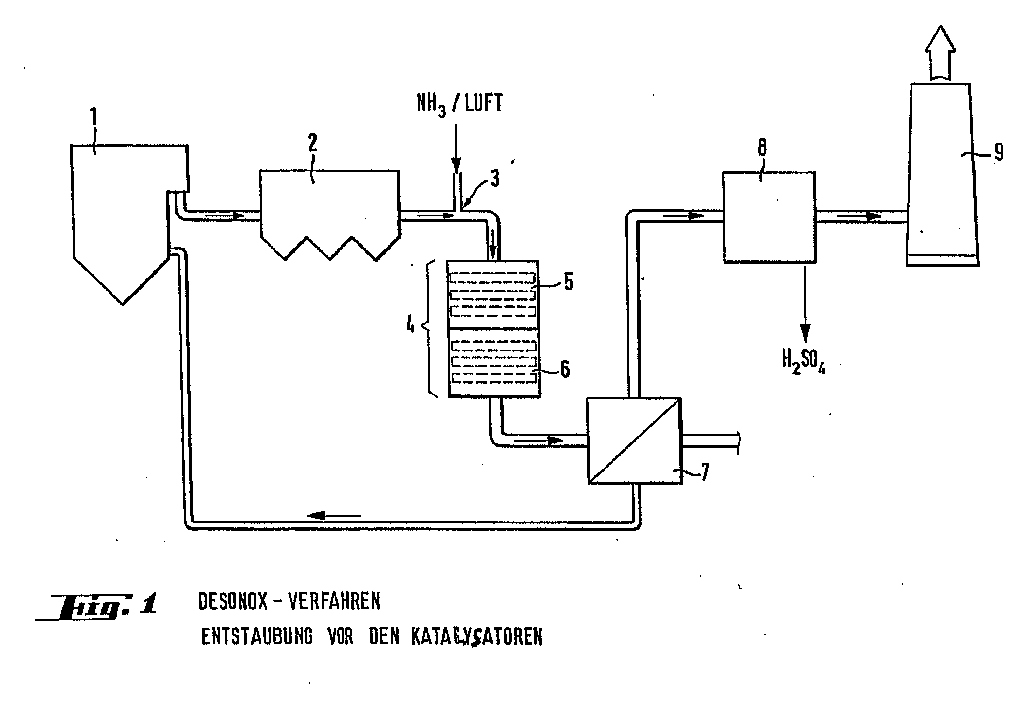

Gemäß Figur 1 werden die aus der Kesselanlage 1 austretenden Rauchgase in einem heißgehenden Elektrofilter 2 entstaubt, dann bei 3 mit einem Ammoniak/Luft-Gemisch versetzt und in den Kombi-Reaktor 4 eingespeist. In dem Reaktor sind in Strömungsrichtung des Gases zunächst drei Schichten monolithischer keramischer Wabenkatalysatoren 5 zur Stickoxidreduktion hintereinander angeordnet.

Auf diese Anordnung folgen im selben Reaktorgehäuse drei weitere Schichten monolithischer, keramischer Wabenkatalysatoren 6 zur Schwefeldioxidoxidation. Für die Bemessung der Abstände zwischen den einzelnen Katalysatoren bzw. den Katalysatorarten besteht ein breiter Spielraum. Die Abstände bezwecken die Erzeugung einer turbulenten Querbewegung im Rauchgas und vermeiden dadurch lokal die sog. Strähnenausbildung.

Auf den katalytischen Reaktor 4 folgt ein Wärmeaustauscher 7, wie z.B. ein Rohrbündelwärmeaustauscher. In dem Wärmeaustauscher wird das entstickte und die Schwefelverbindungen als Schwefeltrioxid enthaltende Gas auf die vorgesehene Arbeitstemperatur des $SO_3$-Wäschers abgekühlt. Die dabei abgeführte Wärme dient zur Vorwärmung der Verbrennungsluft für die Kesselfeuerung. In dem Gaswäscher 8 wird das Abgas mit Wasser als solchem oder in Form von verdünnter wäßriger Schwefelsäure, umgesetzt, wobei höherprozentige $H_2SO_4$ gewonnen wird. Den Wäscher betreibt man am besten schon mit einer Schwefelsäure im Kreislauf, welche eine Konzentration hat, die nahe, bei oder gleich der gewünschten Endkonzentration von 75–80 Gew.-% ist. Das den Wäscher verlassende, fertiggereinigte Abgas kann dann über den Kamin 9 an die Atmosphäre abgegeben werden.

Variante 2: Entstaubung vor dem Schwefelsäurewäscher

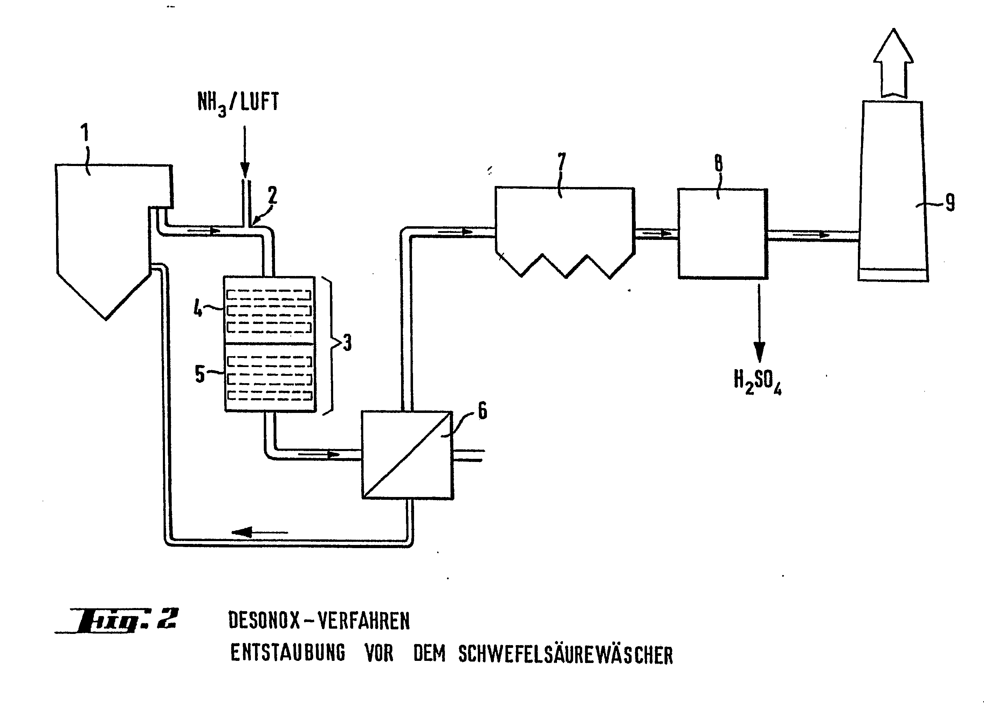

Gemäß Figur 2 werden die aus der Kesselanlage 1 austretenden Rauchgase bei 2 mit einem Ammoniak/Luft-Gemisch versetzt und in den Reaktor 3 eingespeist. In dem Reaktor sind in Strömungsrichtung des Gases zunächst drei Schichten monolithischer, keramischer Wabenkatalysatoren 4 zur Stickoxidreduktion hintereinander angeordnet.

Auf diese Anordnung folgen im selben Reaktorgehäuse drei weitere Schichten monolithischer, keramischer Wabenkatalysatoren 5 zur Schwefeldioxidoxidation. Für die Bemessung der Abstände zwischen den einzelnen Katalysatoren bzw. Katalysatorarten besteht ein breiter Spielraum. Die Abstände bezwecken die Erzeugung einer turbulenten Querbewegung im Rauchgas und vermeiden dadurch lokal die sog. Strähnenbildung.

Auf den katalytischen Reaktor 3 folgt ein Wärmeaustauscher 6, wie z.B. ein Rohrbündelwärmeaustauscher. In dem Wärmeaustauscher wird das entstickte und die Schwefelverbindungen als Schwefeltrioxid enthaltende Gas auf die vorgesehene Arbeitstemperatur des $SO_3$-Wäschers abgekühlt. Die dabei abgeführte Wärme dient zur Vorwärmung der Verbrennungsluft für die Kesselfeuerung. Es folgt das Staubfilter 7.

In dem Wäscher 8 wird das Abgas mit Wasser als solchem oder z.B. in Form von verdünnter wäßriger Schwefelsäure umgesetzt, wobei höherprozentige $H_2SO_4$ gewonnen wird. Den Wäscher betreibt man am besten schon im Kreislauf mit einer Schwefelsäure, welche eine Konzentration hat, die nahe, bei oder gleich der gewünschten Endkonzentration von 75–80 Gew.-% ist. Das den Wäscher verlassende, fertiggereinigte Abgas kann dann über den Kamin 9 an die Atmosphäre abgegeben werden.

Ausführungsbeispiel

Das erfindungsgemäße Verfahren wurde in einer gemäß Funktionsvariante 1 konstruierten Anlage, welche in den Rauchgasweg eines kohlebefeuerten Heizkraftwerks mit Wärmekraftkopplungsschaltung eingefügt war, betrieben.

Als Brennstoff wird bei dem aus ingesamt drei Wasserrohrkesseln mit Naturumlauf bestehenden Heizkraftwerk Steinkohlestaub verwendet. Die Feuerungsleistung eines Kessels beträgt 98 MW. Durch die Wärmekraftkopplung werden jeweils 18 $MW_{el}$ und 50 $MW_{th}$ erzeugt und abgegeben. Die Abgasmenge je Kessel beträgt 110 000 m³ (N)/h.

Das Rauchgas für die Anlage wurde nach einem heißgehenden Elektrofilter, das bei ca. 450°C betrieben wurde, entnommen.

Die technischen Daten der Pilotanlage sind in Tabelle 1 zusammengefaßt.

Tabelle 1

| Technische Daten der Pilotanlage | |
| --- | --- |
| Rauchgasdurchsatz | 500 m³ (N)/h |
| Staubgehalt im Rauchgas nach E-Filter | 20–50 mg/m³ (N) |
| Raumgeschwindigkeit NO$_x$-Katalysator | 7500 h⁻¹ |
| Raumgeschwindigkeit Oxidationskatalysator | 7500 h⁻¹ |
| Leerrohrgeschwindigkeit im Reaktor | 3 m/s |
| Rauchgastemperatur | 420–460°C |
| Gesamtdruckverlust an den Katalysatoren | 2400 Pa |
| Eintrittstemperatur in dem $SO_3$-Wäscher | 130°C |
| Arbeitstemperatur des $SO_3$-Wäschers | 100–110°C |
| $SO_3$-Abscheidegrad des $SO_3$-Wäschers | >95% |
| $H_2SO_4$-Endkonzentration | 77–80 Gew.-% |

Der NO$_x$-Katalysator war als Trägerkatalysator, bestehend aus Mullitwabenkörpern der Abmessungen 150 mm × 150 mm × 150 mm Länge mit einer Zelldichte von 16/cm² und einer Zeolithbeschichtung vom Mordenit-Typ, ausgeführt.

Der Oxidationskatalysator war als Trägerkatalysator, bestehend aus Mullitwabenkörpern der Abmessungen 150 mm × 150 mm × 150 mm Länge mit einer Zelldichte von 16/cm² und einer α-Aluminiumoxidbeschichtung, die 2,5 g/dm³ Platin in feinverteilter Form enthielt, ausgeführt.

Die Abstände zwischen den Katalysatoren gleicher Art betrugen jeweils 160 mm und zwischen den beiden verschiedenen Katalysatoren 200 mm.

Nach 2000 Betriebsstunden konnten bei einem Molverhältnis Ammoniak:Stickoxid von 0,9 Konversionsraten für Stickoxid von größer als 94% und für Schwefeldioxid von größer als 91% gemessen werden. Ein Ammoniakschlupf war in keinem Fall nach dem Kombi-Reaktor nachweisbar.

Die Daten für die Rauchgaszusammensetzung mit den erzielten Konversionsgraden sind in Tabelle 2 zusammengefaßt.

Tabelle 2

Rauchgaszusammensetzung und Konversionsgrade

| Abgas-komponente | Konzentration vor Kombi-Reaktor | Konzentration nach Kombi-Reaktor | Konversions-grad | Meßmethode |
|---|---|---|---|---|
| $NO_x$ | 380–510 vpm | 20–30 vpm | >94% | Chemielumineszenz-Methode |
| $SO_2$ | 580–640 vpm | 50–57 vpm | >91% | UV-Spektroskopie |
| $O_2$ | 7–8 Vol.-% | ca. 7 Vol.-% | – | Paramagnetische Methode |
| $NH_3$ | 340–455 vpm | nicht nachweisbar | quantitativ | naßchemische Absorption und Analyse |

## Patentansprüche

1. Verfahren zur Reinigung von Oxide des Stickstoffs und Schwefels enthaltenden Abgasen aus Verbrennungsanlagen und industriellen Produktionsprozessen durch katalytische Reduktion der Stickoxide, nachfolgende katalytische Oxidation von Schwefeldioxid mit Sauerstoff und Überführung des erhaltenen Schwefeltrioxids in Schwefelsäure, dadurch gekennzeichnet, daß man die Abgase mit der zu einer selektiven Reduktion der Stickoxide erforderlichen Menge Ammoniak versetzt, das Gemisch einem einzigen Reaktor, der unmittelbar hintereinander einen mit dem Katalysator für die Stickoxidreduktion ausgerüsteten ersten Abschnitt und einen mit dem Oxidationskatalysator ausgerüsteten zweiten Abschnitt aufweist, mit einer Temperatur von 250–550°C zuführt, das von den Stickoxiden sowie gegebenenfalls von Kohlenmonoxid und/oder Kohlenwasserstoffen befreite, Schwefeltrioxid enthaltende Abgas auf eine Temperatur von 70–150°C abkühlt und dann die Hydratisierung des Schwefeltrioxids in einem ein- oder mehrstufigen Wäscher mit 70–85 gew.-%iger Schwefelsäure bei Temperaturen von 40–130°C vornimmt.

2. Verfahren nach Anspruch 1, dadurch gekennzeichnet, daß die Reduktionsstufe mit staubarmem oder weitgehend entstaubtem Abgas beaufschlagt wird oder eine Entstaubung erst nach der Abkühlung des von den Stickoxiden befreiten, Schwefeltrioxid enthaltenden Abgases und vor der Hydratisierung des Schwefeltrioxids vorgenommen wird.

3. Verfahren nach Anspruch 1 oder 2, dadurch gekennzeichnet, daß der Katalysator für die Stickoxidreduktion und der Katalysator für die Schwefeldioxidoxidation Waben- oder auch Schüttgutform aufweisen.

4. Verfahren nach den Ansprüchen 1 bis 3, dadurch gekennzeichnet, daß einer oder beide Katalysatoren durch und durch aus katalytisch aktiver Masse bestehen (Vollkatalysator) oder bei einem oder beiden Katalysatoren die katalytisch aktive Substanz auf einem inerten keramischen oder metallischen Körper, der gegebenenfalls noch mit einer oberflächenvergrößernden Oxidschicht überzogen ist, vorliegt (Trägerkatalysator).

5. Verfahren nach den Ansprüchen 1 bis 4, dadurch gekennzeichnet, daß beide katalytischen Reduktionen im Temperaturbereich 350–450, vorzugsweise 380–420°C betrieben werden.

6. Verfahren nach den Ansprüchen 1 bis 5, dadurch gekennzeichnet, daß man das von den Stickoxiden befreite und die Schwefeldioxidoxidationsstufe verlassende Abgas vor der Hydratisierung des gebildeten Schwefeltrioxids auf eine Temperatur von 110–140°C abkühlt.

7. Verfahren nach den Ansprüchen 1 bis 6, dadurch gekennzeichnet, daß man die Hydratisierung des Schwefeltrioxids mit 75–80 gew.-%iger Schwefelsäure durchführt.

8. Verfahren nach den Ansprüchen 1 bis 7, dadurch gekennzeichnet, daß die Hydratation bei Temperaturen von 95–124, vorzugsweise 100–115°C erfolgt.

EP 0 234 188 B1

## Claims

1. A process for cleaning exhaust gases containing oxides of nitrogen and sulfur from internal combustion engines and industrial production processes by catalytic reduction of the nitrogen oxides, subsequent catalytic oxidation of sulfur dioxide with oxygen and conversion of the sulfur trioxide obtained into sulfuric acid, characterized in that ammonia is added to the exhaust gases in the quantity required for selective reduction of the nitrogen oxides, the mixture is delivered at 250 to 550°C to a single reactor comprising in immediate succession a first section charged with the catalyst for reduction of the nitrogen oxides and a second section charged with the oxidation catalyst, the exhaust gas containing sulfur trioxide which has been freed from the nitrogen oxides and, optionally, the carbon monoxide and/or hydrocarbons is cooled to a temperature in the range from 70 to 150°C and the sulfur trioxide is subsequently hydrated with 70 to 85% by weight sulfuric acid at temperatures of 40 to 130°C in a singlestage or multistage washer.

2. A process as claimed in claim 1, characterized in that the reduction stage is charged with low-dust exhaust gas or with exhaust gas substantially freed from dust or the removal of dust is only carried out after cooling of the exhaust gas containing sulfur trioxide which has been freed from the nitrogen oxides and before hydration of the sulfur trioxide.

3. A process as claimed in claim 1 or 2, characterized in that the catalyst for the reduction of the nitrogen oxides and the catalyst for the oxidation of the sulfur dioxide are in honeycomb form or even in bulk form.

4. A process as claimed in claims 1 to 3, characterized in that one or both catalysts consist(s) throughout of catalytically active mass (solid catalyst) or, with one or both catalysts, the catalytically active substance is present on an inert ceramic or metallic support optionally coated with a surface-enlarging oxide layer (supported catalyst).

5. A process as claimed in claims 1 to 4, characterized in that both catalytic reductions are operated at temperatures in the range from 350 to 450°C and preferably in the range from 380 to 420°C.

6. A process as claimed in claims 1 to 5, characterized in that the exhaust gas freed from nitrogen oxides leaving the sulfur dioxide oxidation stage is cooled to a temperature of 110 to 140°C before hydration of the sulfur trioxide formed.

7. A process as claimed in claims 1 to 6, characterized in that hydration of the sulfur trioxide is carried out with 75 to 80% by weight sulfuric acid.

8. A process as claimed in claims 1 to 7, characterized in that hydration is carried out at temperatures in the range from 95 to 124°C and preferably in the range from 100 to 115°C.

## Revendications

1. Procédé d'épuration des gaz d'échappement contenant des oxydes d'azote et de soufre provenant d'installations de combustion et de processus industriels, par réduction catalytique des oxydes d'azote, oxydation subséquente par voie catalytique de l'anhydride sulfureux à l'aide d'oxygène et conversion de l'anhydride sulfurique obtenu en acide sulfurique, caractérisé en ce que l'on additionne les gaz d'échappement de la quantité d'ammoniac nécessaire pour une réduction sélective des oxydes d'azote, que l'on amène le mélange à un réacteur unique qui – immédiatement l'un derrière l'autre – possède l'un, une section pourvue d'un catalyseur pour la réduction des oxydes d'azote, et l'autre possède une deuxième section pourvue d'un catalyseur d'oxydation, à une température de 250 à 550°C, que l'on débarrasse des oxydes d'azote de carbone et/ou d'hydrocarbures, que l'on refroidit le gaz d'échappement contenant l'anhydride sulfurique à une température de 70 à 150°C, et que l'on entreprend ensuite l'hydratation de l'anhydride sulfurique dans un laveur à un ou plusieurs étages avec de l'acide sulfurique à 70–85% en poids à des températures de 40 à 130°C.

2. Procédé selon la revendication 1 caractérisé en ce que le stade de réduction s'établit avec un gaz d'échappement pauvre en poussières ou largement dépoussiéré ou qu'un dépoussiérage est effectué en premier lieu après le refroidissement du gaz de combustion débarrasse des oxydes d'azote et contenant de l'anhydride sulfurique, et avant l'hydratation de l'anhydride sulfurique.

3. Procédé selon la revendication 1 ou 2, caractérisé en ce que le catalyseur pour la réduction des oxydes d'azotes et le catalyseur pour l'oxydation de l'anhydride sulfureux possèdent une forme en rayon ou aussi une forme de matériau pulvérulent.

4. Procédé selon les revendications 1 à 3, caractérisé en ce que l'un ou les deux catalyseurs sont composés totalement d'une masse active catalytiquement (catalyseur complet) ou que pour un ou les deux catalyseurs, la substance active catalytiquement se présente sur un solide inerte en céramique ou métallique qui est recouvert le cas échéant encore avec une couche d'oxyde qui augmente la surface (catalyseur support).

5. Procédé selon les revendications 1 à 4, caractérisé en ce que les deux réductions catalytiques sont effectués dans une zone de température de 350 à 450°C de préférence de 380 à 420°C.

6. Procédé selon les revendications 1 à 5, caractérisé en ce que l'on refroidit le gaz d'échappement débarrassé des oxydes d'azote et qui quitte l'étape d'oxydation de l'anhydride sulfurique formé, à une température de 110 à 140°C.

7

7. Procédé selon les revendications 1 à 6, caractérisé en ce que l'on exécute l'hydratation de l'anhydride sulfurique à l'aide d'acide sulfurique à 75–80% en poids.

8. Procédé selon les revendications 1 à 7, caractérisé en ce que l'hydratation s'effectue à des températures de 95 à 124°C de préférence de 100 à 115°C.

NH$_3$ / LUFT

H$_2$SO$_4$

EP 0 234 188 B1

*Fig. 1*  DESONOX - VERFAHREN

ENTSTAUBUNG VOR DEN KATALYSATOREN

**Fig. 2** DESONOX – VERFAHREN

ENTSTAUBUNG VOR DEM SCHWEFELSÄUREWÄSCHER